# EUROPÄISCHE PATENTSCHRIFT

(11) **EP 3 994 022 B1**
(45) Veröffentlichungstag und Bekanntmachung des Hinweises auf die Patenterteilung: **26.07.2023**
(21) Anmeldenummer: 20763998.0
(22) Anmeldetag: 10.08.2020
(51) Int. Cl.: B60L 1/00, B60L 3/00, B60L 5/18, B60L 9/00

(54) **MEHRGLIEDRIGES SCHIENENFAHRZEUG**
MULTIPLE-UNIT RAIL VEHICLE
VÉHICULE FERROVIAIRE À UNITÉS MULTIPLES

(30) Priorität: 02.09.2019 DE 102019213202
(43) Veröffentlichungstag der Anmeldung: 11.05.2022
(73) Patentinhaber: Siemens Mobility GmbH, 81739 München (DE)
(72) Erfinder: WOLF, Guido, 96148 Baunach (DE)
(74) Vertreter: Siemens Patent Attorneys
(86) Internationale Anmeldenummer: PCT/EP2020/072401
(87) Internationale Veröffentlichungsnummer: WO 2021/043537

(56) Entgegenhaltungen:
- EP-A2- 0 231 017
- EP-A2- 0 976 633
- EP-A2- 1 977 948
- CH-A- 126 004
- DE-A1- 4 125 446
- US-B2- 10 300 790

## Beschreibung

Die Erfindung bezieht sich auf mehrgliedrige Schienenfahrzeuge, insbesondere Eisenbahnzüge, mit zwei oder mehr Wagen und einem oder mehr begehbaren Wagenübergangsbereichen und zumindest einem Potentialausgleichsleiter.

Bekanntermaßen können Eisenbahnzüge Wagen aufweisen, die über Potentialausgleichsleiter elektrisch miteinander verbunden sind, um einen Stromfluss zwischen den Wagenkästen zum Zwecke einer Erdung der gekoppelten Wagen bzw. des gesamten Eisenbahnzugs zu ermöglichen. Derartige Potentialausgleichsleiter sind bei heutigen Eisenbahnzügen unterhalb der Wagenübergangsbereiche angeordnet.

US 10300790 B2 offenbart ein Stromübertragungssystem. Es gibt zahlreiche technische Gebiete, bei welchen es sicherheitskritisch ist, wenn ein Stromübertragungssystem einer Anlage einen Isolationsfehler aufweist, da der Isolationsfehler z.B. zu einem Ausfall einer Stromversorgung führen kann.

Der Erfindung liegt die Aufgabe zugrunde, ein mehrgliedriges Schienenfahrzeug anzugeben, bei dem eine Belastung von Menschen oder Tieren, die Wagenübergangsbereiche passieren, durch Magnetfelder, die von Antriebsströmen und/oder Rückströmen verursacht werden, geringer ist als bei vorbekannten Schienenfahrzeugen.

Diese Aufgabe wird erfindungsgemäß durch ein mehrgliedriges Schienenfahrzeug mit den Merkmalen gemäß Patentanspruch 1 gelöst. Vorteilhafte Ausgestaltungen des erfindungsgemäßen Schienenfahrzeugs sind in Unteransprüchen angegeben.

Danach ist erfindungsgemäß vorgesehen, dass das Schienenfahrzeug zumindest einen inneren Zugabschnitt aufweist, der durch zwei abschnittsbegrenzende Wagen begrenzt wird, wobei der innere Zugabschnitt allein durch einen einzigen Wagenübergangsbereich gebildet ist oder einen oder mehr innere Wagen und mehr als einen Wagenübergangsbereich umfasst, die abschnittsbegrenzenden Wagen jeweils radseitig geerdet sind, sodass ein Teil eines schienenseitigen Rückstroms von streckenseitigen Schienen, auf denen das Schienenfahrzeug steht oder fährt, in einen der abschnittsbegrenzenden Wagen hineinfließen und als fahrzeugseitiger Rückstrom durch den inneren Zugabschnitt hindurch und vom anderen der abschnittsbegrenzenden Wagen zurück in die Schienen fließen kann, und zwar parallel zu einem anderen Teil des schienenseitigen Rückstroms, der in den streckenseitigen Schienen fließt, und bei allen begehbaren Wagenübergangsbereichen, die im inneren Zugabschnitt angeordnet sind, oberhalb des jeweiligen Wagenübergangsbereichs ein elektrischer Potentialausgleichsleiter angeordnet ist, der die durch den jeweiligen Wagenübergangsbereich miteinander gekoppelten Wagen elektrisch verbindet und den gesamten oder zumindest einen Anteil des fahrzeugseitigen Rückstroms oberhalb des begehbaren Wagenübergangsbereichs an diesem vorbeileitet.

Ein wesentlicher Vorteil des erfindungsgemäßen Schienenfahrzeugs ist darin zu sehen, dass durch die Anordnung von Potentialausgleichsleitern oberhalb von Wagenübergangsbereichen eine zumindest teilweise Kompensation von Magnetfeldern erreicht werden kann, sodass das auf in Wagenübergangsbereichen befindlichen Personen oder Tieren einwirkende Gesamtmagnetfeld kleiner sein kann als bei Wagenübergangsbereichen, bei denen Potentialausgleichsleiter unterhalb der Wagenübergangsbereiche angeordnet sind. Konkret macht sich die Erfindung die Erkenntnis zunutze, dass ein Magnetfeld, das durch einen durch einen streckenseitigen Fahrdraht fließenden Strom erzeugt wird, mit einem Magnetfeld, das durch den Rückstrom verursacht wird, zumindest teilweise kompensiert werden kann, wenn die Potentialausgleichsleiter oberhalb der Wagenübergangsbereiche angeordnet sind und nicht unterhalb.

Bei einer vorteilhaften Ausgestaltung des Schienenfahrzeugs ist vorgesehen, dass dieses einen dachseitig angebrachten Stromabnehmer zum elektrischen Anschluss an einen oberhalb des Schienenfahrzeugs angeordneten streckenseitigen Fahrdraht aufweist und bei allen begehbaren Wagenübergangsbereichen, die im inneren Zugabschnitt angeordnet sind, der Potentialausgleichsleiter jeweils räumlich zwischen dem Wagenübergangsbereich und dem Fahrdraht angeordnet ist und den gesamten oder zumindest einen Anteil des fahrzeugseitigen Rückstroms zwischen dem Fahrdraht und dem begehbaren Wagenübergangsbereich führt.

Wird ein defektes Schienenfahrzeug mittels eines Abschleppfahrzeugs abgeschleppt, so gelten die obigen Ausführungen entsprechend; in diesem Falle bildet der neue Verband aus defektem Schienenfahrzeug und Abschleppfahrzeug das mehrgliedrige Schienenfahrzeug im Sinne der obigen Erläuterungen.

Bei einer vorteilhaften Ausgestaltung ist vorgesehen, dass einer der abschnittsbegrenzenden Wagen den ersten Wagen des Schienenfahrzeugs und der andere der abschnittsbegrenzenden Wagen den letzten Wagen des Schienenfahrzeugs bildet.

Bei einer anderen vorteilhaften Ausgestaltung ist vorgesehen, dass zumindest einer der abschnittsbegrenzenden Wagen ein innenliegender Wagen des mehrgliedrigen Schienenfahrzeugs ist, der zwischen dem anderen abschnittsbegrenzenden Wagen und einem anderen außerhalb des Zugabschnitts befindlichen Wagen angeordnet ist.

Bei der letztgenannten Ausgestaltung kann in vorteilhafter Weise auch vorgesehen sein, dass beide abschnittsbegrenzende Wagen innenliegende Wagen des mehrgliedrigen Schienenfahrzeugs sind, die zwischen dem jeweils anderen abschnittsbegrenzenden Wagen und jeweils einem anderen außerhalb des inneren Zugabschnitts befindlichen Wagen angeordnet sind.

Auch kann in vorteilhafter Weise vorgesehen sein, dass zumindest einer der inneren Wagen des inneren Zugabschnitts radseitig geerdet ist und innere Erdungskontakte bildet, die einen Stromfluss zwischen den streckenseitigen Schienen und dem jeweiligen geerdeten inneren Wagen ermöglichen.

Besonders vorteilhaft ist es, wenn alle inneren Wagen des inneren Zugabschnitts radseitig geerdet sind und innere Erdungskontakte bilden, die einen Stromfluss zwischen den streckenseitigen Schienen und dem jeweiligen geerdeten Wagen ermöglichen. Durch die niederohmige Anbindung aller Wagenkästen der inneren Wagen an die Schienen und durch die niederohmige Verbindung untereinander mittels Potentialausgleichsleiter bildet der innere Zugabschnitt einen besonders niederohmigen elektrischen Parallelpfad zum Gleis aus, so dass ein Großteil des Schienenrückstroms über die Wagenkästen und über die Potentialausgleichsleiter fließen wird und die oben beschriebene Magnetfeldkompensation besonders effizient wird.

Alternativ kann vorgesehen sein, dass keiner der inneren Wagen des inneren Zugabschnitts radseitig geerdet ist und keiner innere Erdungskontakte bildet, die einen Stromfluss zwischen den streckenseitigen Schienen und dem jeweiligen geerdeten Wagen ermöglichen.

Bei einer weiteren vorteilhaften Ausgestaltung ist vorgesehen, dass das Schienenfahrzeug mindestens einen angetriebenen Wagen aufweist, der mit einem dachseitig angebrachten Stromabnehmer zum elektrischen Anschluss an einen oberhalb des Schienenfahrzeugs angeordneten streckenseitigen Fahrdraht ausgestattet ist.

Bei einer anderen vorteilhaften Ausgestaltung ist vorgesehen, dass das Schienenfahrzeug mindestens einen angetriebenen Wagen aufweist, der keinen eigenen Stromabnehmer aufweist und mit einem dachseitig angebrachten Stromabnehmer eines anderen Wagens in Verbindung steht.

Der angetriebene Wagen kann einen der abschnittsbegrenzenden Wagen bilden und den inneren Zugabschnitt begrenzen. Alternativ kann der angetriebene Wagen ein innerer Wagen des inneren Zugabschnitts sein.

Auch ist es vorteilhaft, wenn das Schienenfahrzeug mindestens zwei angetriebene Wagen aufweist, die mit einem dachseitig angebrachten Stromabnehmer zum elektrischen Anschluss an einen oberhalb des Schienenfahrzeugs angeordneten streckenseitigen Fahrdraht ausgestattet sind, wobei einer der mindestens zwei angetriebenen Wagen ein innerer Wagen des inneren Zugabschnitts ist und ein anderer der mindestens zwei angetriebenen Wagen ein Wagen außerhalb des inneren Zugabschnitts, insbesondere ein abschnittsbegrenzender Wagen, ist.

Alternativ kann in vorteilhafter Weise vorgesehen sein, dass das Schienenfahrzeug mindestens zwei angetriebene Wagen aufweist, die mit einem dachseitig angebrachten Stromabnehmer zum elektrischen Anschluss an einen oberhalb des Schienenfahrzeugs angeordneten streckenseitigen Fahrdraht ausgestattet sind, wobei beide angetriebene Wagen Wagen außerhalb des inneren Zugabschnitts, insbesondere abschnittsbegrenzende Wagen, sind.

Die Erfindung wird nachfolgend anhand von Ausführungsbeispielen näher erläutert, dabei zeigen beispielhaft
- Figur 1: zur allgemeinen Erläuterung ein mehrgliedriges Schienenfahrzeug, bei dem ein elektrischer Potentialausgleichsleiter unter einem begehbaren Wagenübergangsbereich angeordnet ist, und
- Figuren 2-9: Ausführungsbeispiele für erfindungsgemäße Schienenfahrzeuge, bei denen Wagenübergangsbereiche mit darüber befindlichen Potentialausgleichsleitern vorhanden sind.

In den Figuren werden für identische oder vergleichbare Komponenten stets dieselben Bezugszeichen verwendet.

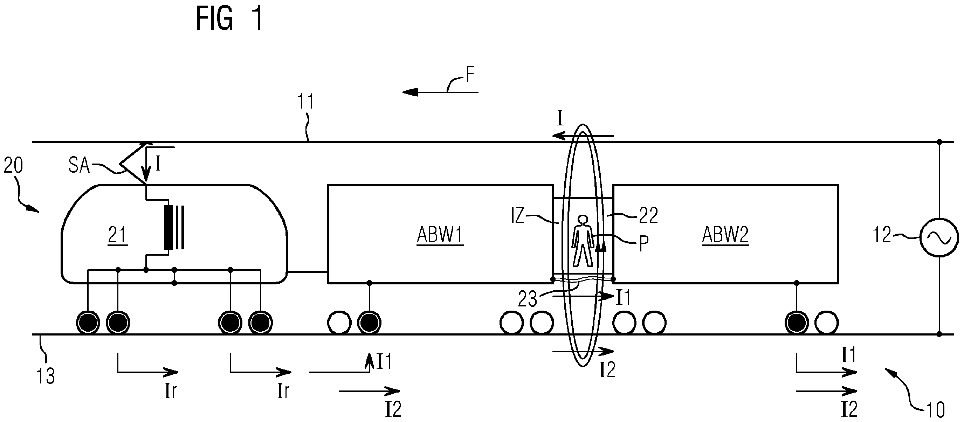

Die Figur 1 zeigt eine Schienenstrecke 10, die mit einem elektrischen Fahrdraht 11 ausgestattet ist. Der Fahrdraht 11 wird von einem streckenseitigen Unterwerk 12 aus gespeist.

Auf der Schienenstrecke 10 befindet sich ein mehrgliedriges Schienenfahrzeug in Form eines Eisenbahnzugs 20, der einen angetriebenen Wagen in Form einer Lokomotive 21, einen ersten abschnittsbegrenzenden Wagen ABW1 und einen zweiten abschnittsbegrenzenden Wagen ABW2 umfasst.

Die beiden abschnittsbegrenzenden Wagen ABW1 und ABW2 begrenzen einen inneren Zugabschnitt IZ des Eisenbahnzugs 20, der bei dem Ausführungsbeispiel gemäß Figur 1 allein durch einen einzigen Wagenübergangsbereich 22 des Eisenbahnzugs 20 gebildet ist. Unterhalb des Wagenübergangsbereichs 22 befindet sich ein Potentialausgleichsleiter 23, der die Wagenkästen der beiden abschnittsbegrenzenden Wagen ABW1 und ABW2 elektrisch miteinander verbindet und einen Stromfluss zwischen den Wagenkästen ermöglicht.

Bei dem Ausführungsbeispiel gemäß Figur 1 wird während des Betriebs der Lokomotive 21 ein über den Fahrdraht 11 fließender Antriebsstrom I durch einen Stromabnehmer SA und einen nicht gezeigten Antrieb der Lokomotive 21 und von der Lokomotive 21 als Rückstrom Ir über die Schienen 13 der Schienenstrecke 10 zum Unterwerk 12 zurückfließen.

Zur Veranschaulichung der Vorteile, die durch die weiter unten beispielhaft beschriebenen, erfindungsgemäßen Ausführungsbeispiele erzielt werden, wird nachfolgend im Zusammenhang mit der Figur 1 beispielhaft davon ausgegangen, dass der in Vorwärtsfahrtrichtung F vorn liegende erste abschnittsbegrenzende Wagen ABW1 mit einem seiner Radsätze am vorderen Drehgestell geerdet ist und der in Vorwärtsfahrtrichtung F hintere bzw. zweite abschnittsbegrenzende Wagen ABW2 mit einem seiner Radsätze am hinteren Drehgestell geerdet ist. Die geerdeten Radsätze bzw. die durch diese gebildeten radseitigen Erdungskontakte sind zum besseren Verständnis in den Figuren ausgefüllt und die nicht geerdeten sind ungefüllt.

Wegen der in der Regel hohen elektrischen Leitfähigkeit von Wagenkästen - zumindest im Bereich der Eisenbahntechnik - kann der elektrische Widerstand der Radkästen ähnlich groß sein wie der elektrische Widerstand der Schienen 13 unterhalb des jeweiligen Wagenkastens. Der durch die Schienen 13 zurückfließende Rückstrom Ir kann sich deshalb im Bereich des vorderen geerdeten Radsatzes des ersten abschnittsbegrenzenden Wagens ABW1 in zwei Anteile bzw. Stromanteile aufteilen, die in der Figur 1 mit den Bezugszeichen I1 und I2 gekennzeichnet sind.

Der eine Stromanteil I1 wird über die radseitigen Erdungskontakte in den Wagenkasten des ersten abschnittsbegrenzenden Wagens ABW1 hinein und durch die leitenden Bestandteile des Wagenkastens, insbesondere - so vorhanden - durch Längsträger des Wagenkastens, in Richtung zum Wagenübergangsbereich 22 und über den Potentialausgleichsleiter 23 in den Wagenkasten des zweiten abschnittsbegrenzenden Wagens ABW2 fließen. Von dort wird der Stromanteil I1 über die radseitigen Erdungskontakte des zweiten abschnittsbegrenzenden Wagens ABW2 wieder in die Schienen 13 der Schienenstrecke 10 fließen und gemeinsam mit dem in den Schienen 13 verbliebenen Stromanteil I2 des Rückstromes Ir zum Unterwerk 12 zurückfließen.

Zusammengefasst wird also ein nicht irrelevanter Stromanteil I1 des Rückstroms Ir durch die beiden abschnittsbegrenzenden Wagen ABW1 und ABW2 sowie über den Potentialausgleichsleiter 23 im Wagenübergangsbereich 22 fließen.

Da bei dem Eisenbahnzug 20 gemäß Figur 1 der Potentialausgleichsleiter 23 unter dem Wagenübergangsbereich 22 angeordnet ist, wird das von dem Stromanteil I1 hervorgerufene magnetische Feld unmittelbar auf eine im Wagenübergangsbereich 22 befindliche Person P einwirken können. Dazu kommt noch das Magnetfeld, das von dem Strom I, der im Fahrdraht 11 geführt wird, erzeugt wird.

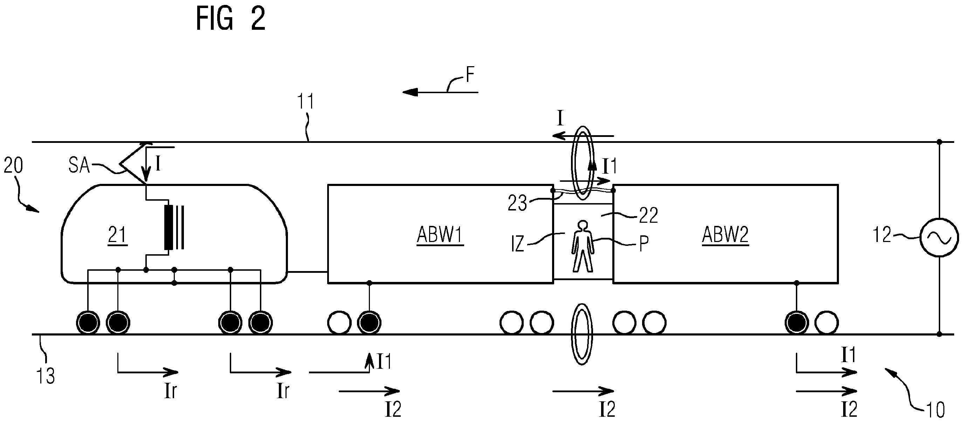

Die Figur 2 zeigt ein Ausführungsbeispiel für ein erfindungsgemäßes mehrgliedriges Schienenfahrzeug in Form eines Eisenbahnzuges 20. Der Eisenbahnzug 20 entspricht im Wesentlichen dem Eisenbahnzug 20 gemäß Figur 1 mit dem Unterschied, dass die Anordnung des Potentialausgleichsleiters 23 anders gewählt ist. So lässt die Figur 2 erkennen, dass der Potentialausgleichsleiter 23 nicht unterhalb des Wagenübergangsbereichs 22 angeordnet ist, sondern über dem Wagenübergangsbereich 22, also im Bereich zwischen dem Übergangsbereich 22 und dem Fahrdraht 11 der Schienenstrecke 10.

Aufgrund der Anordnung des Potentialausgleichsleiters 23 oberhalb des Wagenübergangsbereichs 22 und aufgrund der unterschiedlichen Stromrichtungen des Stroms I im Fahrdraht 11 und des Stromanteils I1 des Rückstromes Ir kommt es zumindest zu einer teilweisen Kompensation bzw. subtraktiven Überlagerung der beiden Magnetfelder, die von dem Strom I und dem Stromanteil I1 erzeugt werden, sodass das insgesamt auf die im Wagenübergangsbereich 22 befindliche Person P wirkende resultierende magnetische Gesamtfeld kleiner ist als bei dem Ausführungsbeispiel gemäß Figur 1.

Mit anderen Worten wird durch die andere Anordnung des Potentialausgleichsleiters 23 im Bereich nahe am Fahrdraht 11 erreicht, dass sich das vom Strom I im Fahrdraht 11 erzeugte Magnetfeld von dem im Potentialausgleichsleiter 23 fließenden Stromanteil I1 reduzieren lässt.

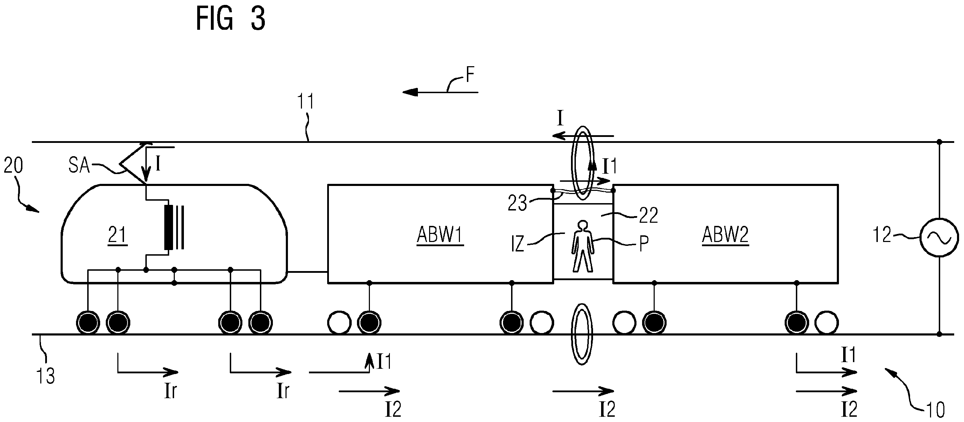

Die Figur 3 zeigt ein zweites Ausführungsbeispiel für ein erfindungsgemäßes mehrgliedriges Schienenfahrzeugs in Form eines Eisenbahnzugs 20. Das Ausführungsbeispiel gemäß Figur 3 entspricht dem Ausführungsbeispiel gemäß Figur 2 mit dem Unterschied, dass bei beiden abschnittsbegrenzenden Wagen ABW1 und ABW2 jeweils der vordere und der hintere Radsatz geerdet sind bzw. innere Erdungskontakte bilden, die einen Stromfluss zwischen den streckenseitigen Schienen 13 der Schienenstrecke 10 und dem jeweiligen geerdeten Wagen ABW1 bzw. ABW2 ermöglicht. Im Übrigen gelten die obigen Ausführungen im Zusammenhang mit der Figur 2 entsprechend.

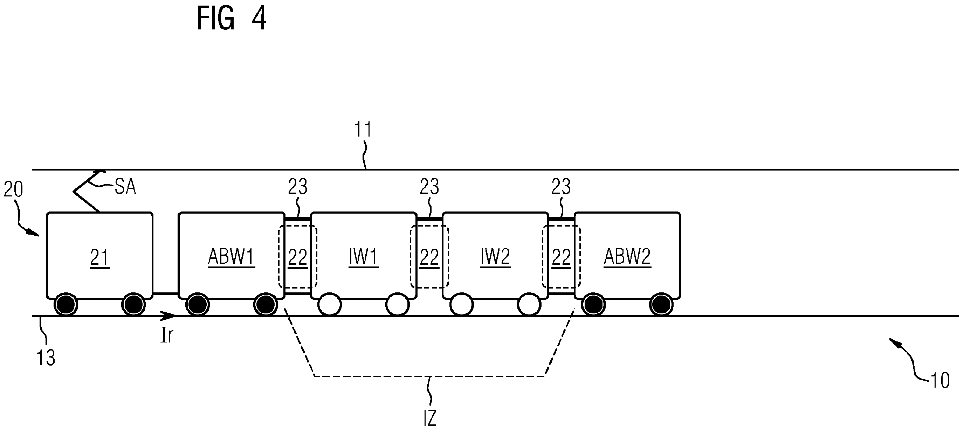

Die Figur 4 zeigt ein drittes Ausführungsbeispiel für ein mehrgliedriges Schienenfahrzeugs in Form eines Eisenbahnzugs 20. Bei dem dritten Ausführungsbeispiel wird der innere Zugabschnitt IZ nicht durch einen einzigen Wagenübergangsbereich 22 gebildet, sondern durch eine Vielzahl an inneren Wagen und eine Vielzahl an Wagenübergangsbereichen 22. Aus Gründen der Übersicht sind in der Figur 4 lediglich zwei innere Wagen IW1 und IW2 sowie drei Wagenübergangsbereiche 22 gezeigt, jedoch kann der innere Zugsabschnitt IZ auch mehr als zwei innere Wagen und mehr Wagenübergangsbereiche 22 aufweisen.

Bei dem Ausführungsbeispiel gemäß Figur 4 sind die inneren Wagen IW1 und IW2 radseitig nicht geerdet, sodass ein in den ersten abschnittsbegrenzenden Wagen ABW1 hineinfließender Stromanteil des Rückstromes Ir alle inneren Wagen IW1 und IW2 sowie die Potentialausgleichsleiter 23 oberhalb der Übergangsbereiche 22 durchfließen wird, bevor er am zweiten abschnittsbegrenzenden Wagen ABW2 wieder in die Schienen 13 der Schienenstrecke 10 zurückgekoppelt wird. Bezüglich der Anordnung der Potentialausgleichsleiter 23 oberhalb der Wagenübergangsbereiche 22, also im Bereich zwischen Wagenübergangsbereich 22 und Fahrdraht 11, und die vorteilhafte Reduktion des resultierenden Magnetfelds innerhalb der Wagenübergangsbereiche 22 gelten die obigen Ausführungen, insbesondere im Zusammenhang mit der Figur 2 entsprechend.

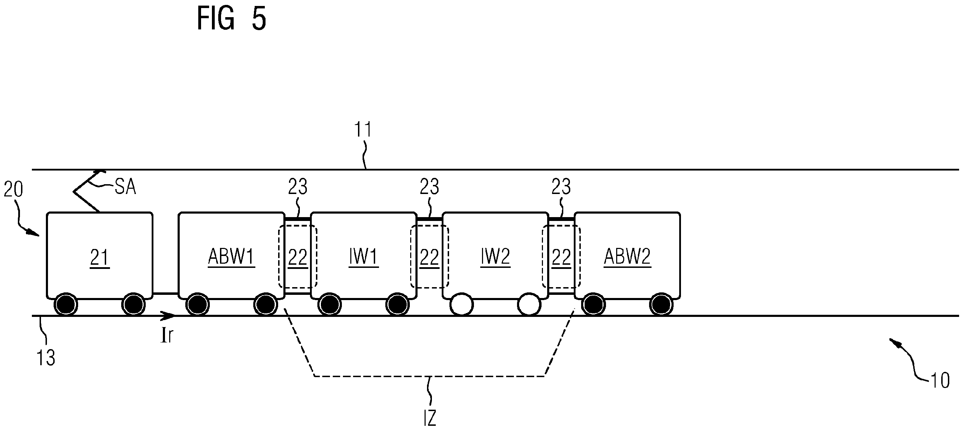

Die Figur 5 zeigt eine Ausführungsvariante des Ausführungsbeispiels gemäß Figur 4. Bei der Ausführungsvariante gemäß Figur 5 ist einer der inneren Wagen, beispielsweise der innere Wagen IW1, radseitig geerdet und der andere innere Wagen IW2 nicht. Mit anderen Worten gibt es also innere Wagen des inneren Zugabschnitts IZ, die radseitig geerdet sind, sowie andere, die radseitig nicht geerdet sind. Im Übrigen gelten die obigen Ausführungen im Zusammenhang mit den Figuren 1 bis 4, insbesondere mit Blick auf die vorteilhafte Reduktion des resultierenden Magnetfelds innerhalb der Wagenübergangsbereiche 22 entsprechend.

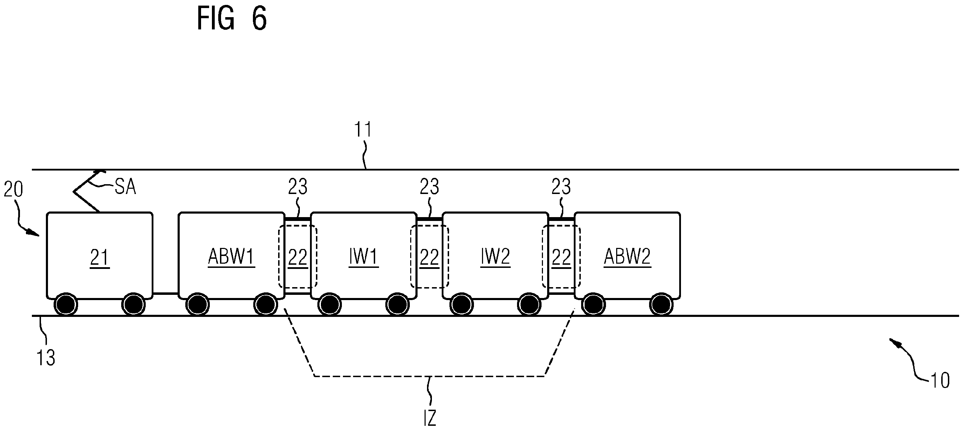

Die Figur 6 zeigt eine andere Ausführungsvariante des Ausführungsbeispiels gemäß Figur 4. Bei der Ausführungsvariante gemäß Figur 6 sind alle inneren Wagen IW1 und IW2 radseitig geerdet und bilden innere Erdungskontakte, die einen Stromfluss zwischen den streckenseitigen Schienen 13 der Schienenstrecke 10 und dem jeweils geerdeten inneren Wagen IW1 bzw. IW2 ermöglichen. Im Übrigen gelten die obigen Ausführungen im Zusammenhang mit den Figuren 1 bis 5, insbesondere mit Blick auf die vorteilhafte Reduktion des resultierenden Magnetfelds innerhalb der Wagenübergangsbereiche 22, entsprechend.

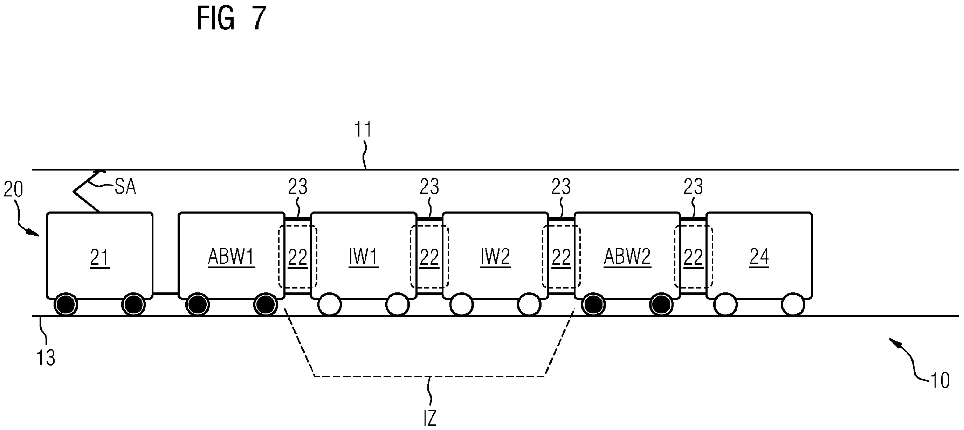

Bei den Ausführungsbeispielen gemäß den Figuren 2 bis 6 bildet der zweite abschnittsbegrenzende Wagen ABW2 den letzten Wagen des Eisenbahnzugs 20. Alternativ kann vorgesehen sein, dass der innere Zugabschnitt IZ in den Eisenbahnzug 20 eingebettet ist, wie dies beispielhaft die Figur 7 zeigt. In der Figur 7 lässt sich erkennen, dass beide abschnittsbegrenzende Wagen ABW1 und ABW2 jeweils - bezogen auf den Eisenbahnzug 20 - innenliegende Wagen bilden, da an den zweiten abschnittsbegrenzenden Wagen ABW2 noch ein weiterer Wagen 24, der beispielsweise radseitig ungeerdet ist, angehängt ist. Im Übrigen gelten die obigen Ausführungen im Zusammenhang mit den Figuren 1 bis 6, insbesondere mit Blick auf die vorteilhafte Reduktion des resultierenden Magnetfelds innerhalb der Wagenübergangsbereiche 22, für den inneren Zugabschnitt IZ entsprechend.

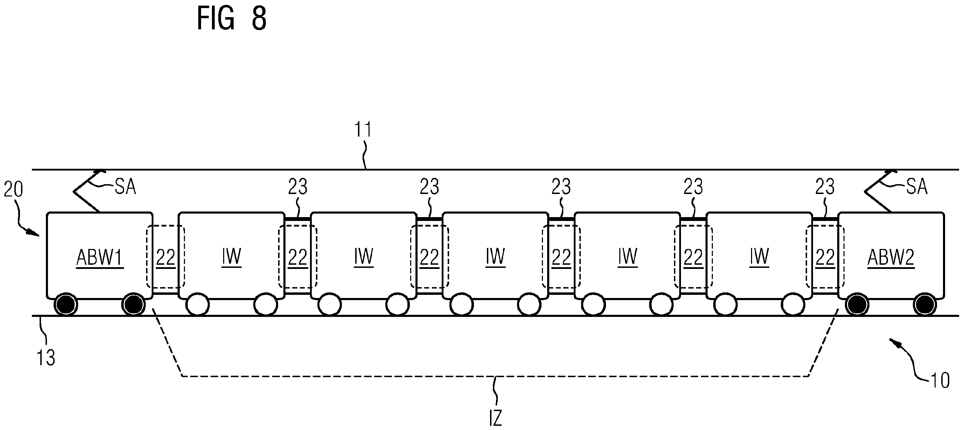

Die Figur 8 zeigt ein Ausführungsbeispiel für ein erfindungsgemäßes mehrgliedriges Schienenfahrzeug in Form eines Eisenbahnzugs 20, bei dem die zwei abschnittsbegrenzenden Wagen ABW1 und ABW2 gleichzeitig - bezogen auf den Eisenbahnzug 20 - außenliegende Wagen bilden; konkret bildet der erste abschnittsbegrenzende Wagen ABW1 den ersten Wagen des Eisenbahnzugs 20 und der zweite abschnittsbegrenzende Wagen ABW2 den letzten Wagen des Eisenbahnzugs 20.

Bei dem Ausführungsbeispiel gemäß Figur 8 können die inneren Wagen IW des inneren Zugabschnitts IZ ungeerdet sein, wie dies auch die Figuren 4 und 7 zeigen; alternativ können einige oder alle inneren Wagen des inneren Zugabschnitts geerdet sein, wie dies im Zusammenhang mit den Figuren 5 und 6 erläutert worden ist.

Im Übrigen gelten die obigen Ausführungen im Zusammenhang mit den Figuren 1 bis 7, insbesondere mit Blick auf die vorteilhafte Reduktion des resultierenden Magnetfelds innerhalb der Wagenübergangsbereiche 22, für das Ausführungsbeispiel gemäß Figur 8 entsprechend.

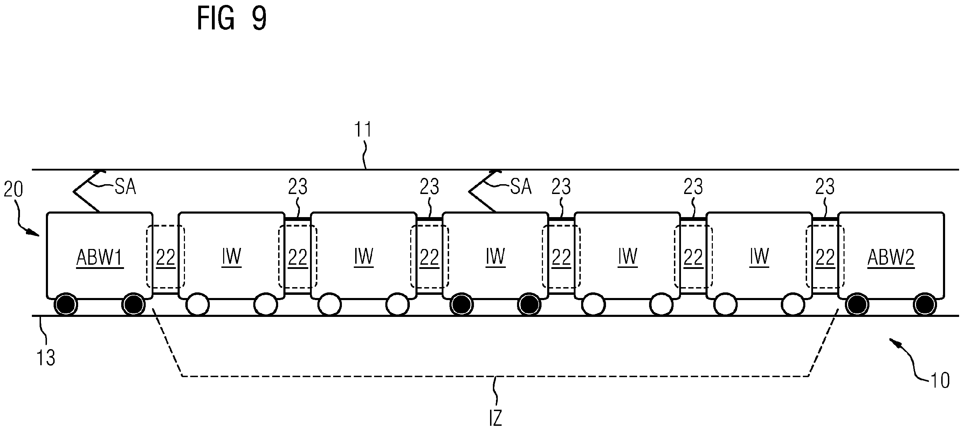

Bei dem Ausführungsbeispiel gemäß Figur 8 sind die beiden abschnittsbegrenzenden Wagen ABW1 und ABW2 bzw. der erste und letzte Wagen des Eisenbahnzugs 20 jeweils mit einem Stromabnehmer und einem Antrieb ausgestattet. Alternativ oder zusätzlich ist es möglich, dass einer oder mehrere angetriebene Wagen und/oder mit ein oder mehr mit Stromabnehmer ausgestattete Wagen innere Wagen des inneren Zugabschnitts IZ des Eisenbahnzugs 20 sind. Eine solche Ausgestaltung zeigt beispielhaft die Figur 9.

Im Übrigen gelten die obigen Ausführungen im Zusammenhang mit den Figuren 1 bis 8, insbesondere mit Blick auf die vorteilhafte Reduktion des resultierenden Magnetfelds innerhalb der Wagenübergangsbereiche 22, für das Ausführungsbeispiel gemäß Figur 9 entsprechend.

Im Zusammenhang mit den obigen Ausführungsbeispielen wurde beispielhaft davon ausgegangen, dass angetriebene Wagen stets einen eigenen Stromabnehmer aufweisen; dies ist nur beispielhaft zu verstehen und nicht zwingend nötig. Alternativ kann vorgesehen sein, dass ein oder mehr Wagen des Eisenbahnzugs 20 zwar Antriebe aufweisen und somit angetriebene Wagen sind, jedoch keinen eigenen Stromabnehmer umfassen und somit mit Strom eines anderen Wagens versorgt werden müssen.

Alternativ oder zusätzlich ist es möglich, dass ein oder mehr Wagen des Eisenbahnzugs 20 lediglich mit einem dachseitig angebrachten Stromabnehmer ausgestattet sind, ohne einen eigenen Antrieb aufzuweisen; solche Wagen können beispielsweise zur Versorgung von angetriebenen Wagen dienen, die selbst keinen eigenen Stromabnehmer aufweisen. Wagen mit Antrieb, aber ohne eigenen Stromabnehmer, und Wagen mit Stromabnehmer, aber ohne eigenen Antrieb, können innere Wagen eines inneren Zugabschnitts IZ, abschnittsbegrenzende Wagen oder außerhalb eines inneren Zugabschnitts IZ liegende Wagen des Eisenbahnzugs 20 sein.

Unabhängig davon, wie die Anordnung bzw. Verteilung von Wagen mit Antrieb und Stromabnehmer, Wagen mit Antrieb, aber ohne Stromabnehmer, und Wagen mit Stromabnehmer, aber ohne Antrieb, im Einzelfall ist, ist es vorteilhaft, wenn in den Wagenübergangsbereichen die elektrischen Potentialausgleichsleiter oberhalb der begehbaren Wagenübergangsbereiche angeordnet ist; diesbezüglich gelten die obigen Ausführungen im Zusammenhang mit den Figuren 1 bis 9, insbesondere mit Blick auf die vorteilhafte Reduktion des resultierenden Magnetfelds innerhalb der Wagenübergangsbereiche 22, entsprechend.

### Bezugszeichenliste

- 10: Schienenstrecke
- 11: Fahrdraht
- 12: Unterwerk
- 13: Schienen
- 20: Eisenbahnzug
- 21: Lokomotive
- 22: Wagenübergangsbereich
- 23: Potentialausgleichsleiter
- 24: Eisenbahnwagen

- ABW1: abschnittsbegrenzender Wagen
- ABW2: abschnittsbegrenzender Wagen
- F: Vorwärtsfahrtrichtung
- I: Antriebsstrom
- I1: Stromanteil
- I2: Stromanteil
- Ir: Rückstrom
- IW: innerer Wagen
- IW1: innerer Wagen
- IW2: innerer Wagen
- IZ: innerer Zugabschnitt
- P: Person
- SA: Stromabnehmer

## Patentansprüche

1. Mehrgliedriges Schienenfahrzeug, insbesondere Eisenbahnzug (20), mit zwei oder mehr Wagen und einem oder mehreren begehbaren Wagenübergangsbereichen (22) und zumindest einem Potentialausgleichsleiter (23),
**dadurch gekennzeichnet, dass**
- das Schienenfahrzeug zumindest einen inneren Zugabschnitt (IZ) aufweist, der durch zwei abschnittsbegrenzende Wagen (ABW1, ABW2) begrenzt wird, wobei der innere Zugabschnitt (IZ) allein durch einen einzigen Wagenübergangsbereich (22) gebildet ist oder einen oder mehrere innere Wagen (IW1, IW2, IW) und mehr als einen Wagenübergangsbereich (22) umfasst,
- die abschnittsbegrenzenden Wagen (ABW1, ABW2) jeweils radseitig geerdet sind, sodass ein Teil (I1) eines schienenseitigen Rückstroms (Ir) von streckenseitigen Schienen (13), auf denen das Schienenfahrzeug steht oder fährt, in einen der abschnittsbegrenzenden Wagen (ABW1, ABW2) hineinfließen und als fahrzeugseitiger Rückstrom (Ir) durch den inneren Zugabschnitt (IZ) hindurch und vom anderen der abschnittsbegrenzenden Wagen (ABW1, ABW2) zurück in die Schienen (13) fließen kann, und zwar parallel zu einem anderen Teil (I2) des schienenseitigen Rückstroms (Ir), der in den streckenseitigen Schienen (13) fließt, und
- bei allen begehbaren Wagenübergangsbereichen (22), die im inneren Zugabschnitt (IZ) angeordnet sind, oberhalb des jeweiligen Wagenübergangsbereichs (22) ein elektrischer Potentialausgleichsleiter (23) angeordnet ist, der die durch den jeweiligen Wagenübergangsbereich (22) miteinander gekoppelten Wagen elektrisch verbindet und den gesamten oder zumindest einen Anteil des fahrzeugseitigen Rückstroms (Ir) oberhalb des begehbaren Wagenübergangsbereichs (22) an diesem vorbeileitet.

2. Schienenfahrzeug nach Anspruch 1,
**dadurch gekennzeichnet, dass**
- das Schienenfahrzeug einen dachseitig angebrachten Stromabnehmer (SA) zum elektrischen Anschluss an einen oberhalb des Schienenfahrzeugs angeordneten streckenseitigen Fahrdraht (11) aufweist und
- bei allen begehbaren Wagenübergangsbereichen (22), die im inneren Zugabschnitt (IZ) angeordnet sind, der Potentialausgleichsleiter (23) jeweils räumlich zwischen dem Wagenübergangsbereich (22) und dem Fahrdraht (11) angeordnet ist und den gesamten oder zumindest einen Anteil des fahrzeugseitigen Rückstroms (Ir) zwischen dem Fahrdraht (11) und dem begehbaren Wagenübergangsbereich (22) führt.

3. Schienenfahrzeug nach einem der voranstehenden Ansprüche, **dadurch gekennzeichnet, dass** einer der abschnittsbegrenzenden Wagen (ABW1) den ersten Wagen des Schienenfahrzeugs und der andere der abschnittsbegrenzenden Wagen (ABW2) den letzten Wagen des Schienenfahrzeugs bildet.

4. Schienenfahrzeug nach einem der voranstehenden Ansprüche 1 bis 2,
**dadurch gekennzeichnet, dass** zumindest einer der abschnittsbegrenzenden Wagen (ABW1, ABW2) ein innenliegender Wagen des mehrgliedrigen Schienenfahrzeugs ist, der zwischen dem anderen abschnittsbegrenzenden Wagen (ABW1, ABW2) und einem anderen außerhalb des Zugabschnitts (IZ) befindlichen Wagen angeordnet ist.

5. Schienenfahrzeug nach Anspruch 4,
**dadurch gekennzeichnet, dass** beide abschnittsbegrenzende Wagen (ABW1, ABW2) innenliegende Wagen des mehrgliedrigen Schienenfahrzeugs sind, die zwischen dem jeweils anderen abschnittsbegrenzenden Wagen (ABW1, ABW2) und jeweils einem anderen außerhalb des inneren Zugabschnitts (IZ) befindlichen Wagen angeordnet sind.

6. Schienenfahrzeug nach einem der voranstehenden Ansprüche,
**dadurch gekennzeichnet, dass** zumindest einer der inneren Wagen (IW1, IW2, IW) des inneren Zugabschnitts (IZ) radseitig geerdet ist und innere Erdungskontakte bildet, die einen Stromfluss zwischen den streckenseitigen Schienen (13) und dem jeweiligen geerdeten inneren Wagen (IW1, IW2, IW) ermöglichen.

7. Schienenfahrzeug nach einem der voranstehenden Ansprüche, **dadurch gekennzeichnet, dass** alle inneren Wagen (IW1, IW2, IW) des inneren Zugabschnitts (IZ) radseitig geerdet sind und innere Erdungskontakte bilden, die einen Stromfluss zwischen den streckenseitigen Schienen (13) und dem jeweiligen geerdeten Wagen ermöglichen.

8. Schienenfahrzeug nach einem der voranstehenden Ansprüche 1 bis 5,
**dadurch gekennzeichnet, dass** keiner der inneren Wagen (IW1, IW2, IW) des inneren Zugabschnitts (IZ) radseitig geerdet ist und innere Erdungskontakte bildet, die einen Stromfluss zwischen den streckenseitigen Schienen (13) und dem jeweiligen geerdeten Wagen ermöglichen.

9. Schienenfahrzeug nach einem der voranstehenden Ansprüche, **dadurch gekennzeichnet, dass** das Schienenfahrzeug mindestens einen angetriebenen Wagen aufweist, der mit einem dachseitig angebrachten Stromabnehmer (SA) zum elektrischen Anschluss an einen oberhalb des Schienenfahrzeugs angeordneten streckenseitigen Fahrdraht (11) ausgestattet ist.

10. Schienenfahrzeug nach einem der voranstehenden Ansprüche, **dadurch gekennzeichnet, dass** das Schienenfahrzeug mindestens einen angetriebenen Wagen aufweist, der keinen eigenen Stromabnehmer (SA) aufweist und mit einem dachseitig angebrachten Stromabnehmer (SA) eines anderen Wagens in Verbindung steht.

11. Schienenfahrzeug nach Anspruch 9 oder 10,
**dadurch gekennzeichnet, dass** der angetriebene Wagen einen der abschnittsbegrenzenden Wagen (ABW1, ABW2) bildet und den inneren Zugabschnitt (IZ) begrenzt.

12. Schienenfahrzeug nach Anspruch 9 oder 10,
**dadurch gekennzeichnet, dass** der angetriebene Wagen ein innerer Wagen (IW1, IW2, IW) des inneren Zugabschnitts (IZ) ist.

13. Schienenfahrzeug nach einem der voranstehenden Ansprüche, **dadurch gekennzeichnet, dass**
- das Schienenfahrzeug mindestens zwei angetriebene Wagen aufweist, die mit einem dachseitig angebrachten Stromabnehmer (SA) zum elektrischen Anschluss an einen oberhalb des Schienenfahrzeugs angeordneten streckenseitigen Fahrdraht (11) ausgestattet sind,
- wobei einer der mindestens zwei angetriebenen Wagen ein innerer Wagen (IW1, IW2, IW) des inneren Zugabschnitts (IZ) ist und ein anderer der mindestens zwei angetriebenen Wagen ein Wagen außerhalb des inneren Zugabschnitts (IZ), insbesondere ein innerer Wagen (IW1, IW2, IW), ist.

14. Schienenfahrzeug nach einem der voranstehenden Ansprüche, **dadurch gekennzeichnet, dass**
- das Schienenfahrzeug mindestens zwei angetriebene Wagen aufweist, die mit einem dachseitig angebrachten Stromabnehmer (SA) zum elektrischen Anschluss an einen oberhalb des Schienenfahrzeugs angeordneten streckenseitigen Fahrdraht (11) ausgestattet sind,
- wobei beide angetriebene Wagen Wagen außerhalb des inneren Zugabschnitts (IZ), insbesondere abschnittsbegrenzende Wagen (ABW1, ABW2), sind.

## Claims

1. Multiple-unit rail vehicle, in particular train (20), having two or more carriages and one or more accessible carriage transition regions (22) and at least one potential equaliser (23),
**characterised in that**
- the rail vehicle has at least one inner train section (IZ), which is bound by two carriages (ABW1, ABW2) which bound the section, wherein the inner train section (IZ) alone is formed by a single carriage transition region (22) or comprises one or more inner carriages (IW1, IW2, IW) and more than one carriage transition region (22),
- the carriages (ABW1, ABW2) bounding the section are each earthed on the wheel side so that one part (I1) of a rail-side return current (Ir) can flow from the track-side rails (13), on which the rail vehicle stands or travels, into one of the carriages (ABW1, ABW2) bounding the section and as a return current (Ir) on the vehicle side through the inner train section (IZ) and back from the other carriage (ABW1, ABW2) bounding the section into the rails (13), namely parallel to another part (I2) of the rail-side return current (Ir) which flows into the track-side rails (13), and
- in all accessible carriage transition regions (22), which are arranged in the inner train section (IZ), an electric potential equaliser (23) is arranged above the respective carriage transition region (22), said potential equaliser (23) electrically connecting the carriages coupled to one another by the respective carriage transition region (22) and routing the entire or at least one portion of the vehicle-side return current (Ir) above the accessible carriage transition region (22) hereto.

2. Rail vehicle according to claim 1,
**characterised in that**
- the rail vehicle has a current collector (SA) attached to the roof for electrical connection to a track-side contact wire (11) arranged above the rail vehicle and
- in all accessible carriage transition regions (22), which are arranged in the inner train section (IZ), the potential equaliser (23) is arranged in each case spatially between the carriage transition region (22) and the contact wire (11) and guides the entire or at least one portion of the vehicle-side return current (Ir) between the contact wire (11) and the accessible carriage transition region (22).

3. Rail vehicle according to one of the preceding claims, **characterised in that**
one of the carriages (ABW1) bounding the section forms the first carriage of the rail vehicle and the other of the carriages (ABW2) bounding the section forms the last carriage of the rail vehicle.

4. Rail vehicle according to one of the preceding claims 1 to 2,
**characterised in that**
at least one of the carriages (ABW1, ABW2) bounding the section is an internal carriage of the multiple-unit rail vehicle, which is arranged between the other carriage (ABW1, ABW2) bounding the section and another carriage located outside of the train section (IZ).

5. Rail vehicle according to claim 4,
**characterised in that**
both carriages (ABW1, ABW2) bounding the section are internal carriages of the multiple-unit rail vehicle, which are arranged between the respective other carriage (ABW1, ABW2) bounding the section and in each case another carriage located outside of the inner train section (IZ).

6. Rail vehicle according to one of the preceding claims, **characterised in that**
at least one of the inner carriages (IW1, IW2, IW) of the inner train section (IZ) is earthed on the wheel side and forms inner earthing contacts, which enable a current flow between the trackside rails (13) and the respective earthed inner carriages (IW1, IW2, IW).

7. Rail vehicle according to one of the preceding claims, **characterised in that**
all inner carriages (IW1, IW2, IW) of the inner train section (IZ) are earthed on the wheel side and form inner earthing contacts, which enable a current flow between the track-side rails (13) and the respective earthed carriages.

8. Rail vehicle according to one of the preceding claims 1 to 5,
**characterised in that**
none of the inner carriages (IW1, IW2, IW) of the inner train section (IZ) are earthed on the wheel side and forms inner earthing contacts which enable a current flow between the track-side rails (13) and the respective earthed carriages.

9. Rail vehicle according to one of the preceding claims, **characterised in that**
the rail vehicle has at least one driven carriage, which is equipped with a current collector (SA) attached to the roof for electrical connection to a track-side contact wire (11) arranged above the rail vehicle.

10. Rail vehicle according to one of the preceding claims, **characterised in that**
the rail vehicle has at least one driven carriage which has no separate current collector (SA) and is connected with a current collector (SA) of another carriage which is attached to the roof.

11. Rail vehicle according to claim 9 or 10,
**characterised in that**
the driven carriage forms one of the carriages (ABW1, ABW2) bounding the section and bounds the inner train section (IZ).

12. Rail vehicle according to claim 9 or 10,
**characterised in that**
the driven carriage is an inner carriage (IW1, IW2, IW) of the inner train section (IZ).

13. Rail vehicle according to one of the preceding claims, **characterised in that**
- the rail vehicle has at least two driven carriages, which are equipped with a current collector (SA) attached to the roof for electrical connection to a track-side contact wire (11) arranged above the rail vehicle,
- wherein one of the at least two driven carriages is an inner carriage (IW1, IW2, IW) of the inner train section (IZ) and another of the at least two driven carriages is a carriage outside of the inner train section (IZ), in particular an inner carriage (IW1, IW2, IW).

14. Rail vehicle according to one of the preceding claims, **characterised in that**
- the rail vehicle has at least two driven carriages, which are equipped with a current collector (SA) attached to the roof for electrical connection to a track-side contact wire (11) arranged above the rail vehicle,
- wherein both driven carriages are carriages outside of the inner train section (IZ), in particular carriages (ABW1, ABW2) bounding the section.

## Revendications

1. Véhicule ferroviaire à éléments multiples, notamment train (20) de chemin de fer, comprenant deux ou plusieurs voitures et une ou plusieurs zones (22) empruntables d'intercirculation entre voitures et au moins un conducteur (23) de compensation de potentiel,
**caractérisé en ce que**
- le véhicule ferroviaire a au moins une partie (IZ) intérieure de train, qui est délimitée par deux voitures (ABW1, ABW2) délimitant la partie, dans lequel la partie (IZ) intérieure du train est formée seulement par une zone (22) unique d'intercirculation entre voitures ou par une ou par plusieurs voitures (IW1, IW2, IW) intérieures et plus qu'une zone (22) d'intercirculation entre voitures,
- les voitures (ABW1, ABW2) délimitant la partie sont mises à la terre chacune du côté d'une roue, de manière à ce qu'une partie (I1) d'un courant (Ir) de retour du côté du rail passe de rails (13) du côté de la voie, sur lesquels le véhicule ferroviaire est en stationnement ou circule, dans l'une des voitures (ABW1, ABW2) délimitant la partie et, comme courant (Ir) de retour du côté du véhicule, peut retourner aux rails (13) en passant par la partie (IZ) intérieure du train et par l'autre des voitures (ABW1, ABW2) délimitant la partie, et cela parallèlement à une autre partie (I2) du courant (Ir) de retour du côté du rail, qui passe dans les rails (13) du côté de la voie, et
- dans toutes les zones (22) empruntables d'intercirculation entre voitures, qui sont disposées dans la partie (IZ) intérieure du train, est monté, au-dessus de la zone (22) respective d'intercirculation entre les voitures, un conducteur (23) électrique de compensation du potentiel, qui relie électriquement des voitures accouplées entre elles par la zone (22) respective d'intercirculation entre voitures et fait passer tout ou au moins une proportion du courant (Ir) de retour du côté du véhicule au-dessus de la zone (22) empruntable d'intercirculation entre des voitures, à côté de celles-ci.

2. Véhicule ferroviaire suivant la revendication 1, **caractérisé en ce que**
- le véhicule ferroviaire a un appareil (SA) de prise de courant monté du côté du toit, pour la connexion électrique à un fil (11) de contact du côté de la voie, disposé au-dessus du véhicule ferroviaire, et
- pour toutes les zones (22) empruntables d'intercirculation entre des voitures, qui sont disposées dans la partie (IZ) intérieure du train, le conducteur (23) de compensation du potentiel est monté respectivement dans l'espace entre la zone (22) d'intercirculation entre voitures et le fil (11) de contact et fait passer tout ou au moins une proportion du courant (Ir) de retour du côté du véhicule entre le fil (11) de contact et la zone (22) empruntable d'intercirculation entre des voitures.

3. Véhicule ferroviaire suivant l'une des revendications précédentes,
**caractérisé en ce que**
l'une des voitures (ABW1) délimitant la partie forme la première voiture du véhicule ferroviaire et l'autre des voitures (ABW2) délimitant la partie forme la dernière voiture du véhicule ferroviaire.

4. Véhicule ferroviaire suivant l'une des revendications 1 à 2 précédentes,
**caractérisé en ce qu'**
au moins l'une des voitures (ABW1, ABW2) délimitant la partie est une voiture se trouvant à l'intérieur du véhicule ferroviaire à éléments multiples, qui est disposée entre l'autre voiture (ABW1, ABW2) délimitant la partie et une autre voiture se trouvant à l'extérieur de la partie (IZ) du train.

5. Véhicule ferroviaire suivant la revendication 4,
**caractérisé en ce que**
les deux voitures (ABW1, ABW2) délimitant la partie sont des voitures se trouvant à l'intérieur du véhicule ferroviaire à éléments multiples, qui sont disposées entre respectivement l'autre voiture (ABW1, ABW2) délimitant la partie et respectivement une autre voiture se trouvant à l'extérieur de la partie (IZ) intérieure du train.

6. Véhicule ferroviaire suivant l'une des revendications précédentes,
**caractérisé en ce qu'**
au moins l'une des voitures (IW1, IW2, IW) intérieures de la partie (IZ) intérieure du train est mise à la terre du côté d'une roue et forme des contacts intérieurs de mise à la terre, qui rendent possible un flux de courant entre les rails (13) du côté de la voie et la voiture (IW1, IW2, IW) intérieure respective mise à la terre.

7. Véhicule ferroviaire suivant l'une des revendications précédentes,
**caractérisé en ce que**
toutes les voitures (IW1, IW2, IW) intérieures de la partie (IZ) intérieure du train sont mises à la terre du côté d'une roue et forment des contacts intérieurs de mise à la terre, qui rendent possible un flux de courant entre les rails (13) du côté de la voie et la voiture respective mise à la terre.

8. Véhicule ferroviaire suivant l'une des revendications 1 à 5 précédentes,
**caractérisé en ce qu'**
aucune des voitures (IW1, IW2, IW) intérieures de la partie (IZ) intérieures du train n'est mise à la terre du côté d'une roue et ne forme des contacts intérieurs de mise à la terre, qui rendent possible un flux de courant entre les rails (13) du côté de la voiture respective mise à la terre.

9. Véhicule ferroviaire suivant l'une des revendications précédentes,
**caractérisé en ce que**
le véhicule ferroviaire a au moins une voiture entraînée, qui est équipée d'un appareil (SA) de prise du courant monté du côté du toit, pour le raccordement électrique à un fil (11) de contact du côté de la voie, disposé au-dessus du véhicule ferroviaire.

10. Véhicule ferroviaire suivant l'une des revendications précédentes,
**caractérisé en ce que**
le véhicule ferroviaire a au moins une voiture entraînée, qui n'a pas d'appareil (SA) propre de prise du courant et qui est en liaison avec un appareil (SA) de prise du courant monté du côté du toit d'une autre voiture.

11. Véhicule ferroviaire suivant la revendication 9 ou 10, **caractérisé en ce que**
la voiture entraînée forme une voiture (ABW1, ABW2) délimitant la partie et délimite la partie (IZ) intérieure du train.

12. Véhicule ferroviaire suivant la revendication 9 ou 10, **caractérisé en ce que**
la voiture entraînée est une voiture (IW1, IW2, IW) intérieure de la partie (IZ) intérieure du train.

13. Véhicule ferroviaire suivant l'une des revendications précédentes,
**caractérisé en ce que**
- le véhicule ferroviaire a au moins deux voitures entraînées, qui sont équipées d'un appareil (SA) de prise du courant monté du côté du toit, pour la connexion électrique à un fil (11) de contact du côté de la voie monté au-dessus du véhicule ferroviaire,
- dans lequel l'une des au moins deux voitures entraînées est une voiture (IW1, IW2, IW) intérieure de la partie (IZ) intérieure du train et une autre des au moins deux voitures entraînées est une voiture à l'extérieur de la partie (IZ) intérieure du train, notamment une voiture (IW1, IW2, IW) intérieure.

14. Véhicule ferroviaire suivant l'une des revendications précédentes,
**caractérisé en ce que**
- le véhicule ferroviaire a au moins deux voitures entraînées, qui sont équipées d'un appareil (SA) de prise du courant monté du côté du toit, pour la connexion électrique à un fil (11) de contact du côté de la voie monté au-dessus du véhicule ferroviaire,
- dans lequel les deux voitures entraînées sont des voitures à l'extérieur de la partie (IZ) intérieure du train, notamment des voitures (ABW1, ABW2) délimitant la partie.
